Europäisches Patentamt

**European Patent Office**

**Office européen des brevets**

(11) Numéro de publication: **0 037 308**

**A1**

(12) **DEMANDE DE BREVET EUROPEEN**

(21) Numéro de dépôt: **81400415.6**

(22) Date de dépôt: **18.03.81**

(51) Int. Cl.3: **C 08 J 9/06**
C 08 K 3/00, C 08 L 27/06

(30) Priorité: **26.03.80 FR 8006702**

(43) Date de publication de la demande:
**07.10.81 Bulletin 81/40**

(84) Etats contractants désignés:
**BE CH DE GB IT LI NL SE**

(71) Demandeur: **COMPAGNIE FRANCAISE DE RAFFINAGE**
**Société anonyme dite:**
**5, rue Michel-Ange**
**F-75781 Paris Cedex 16(FR)**

(72) Inventeur: **Bouquet, Michel**
**15, rue Racine**
**F-76600 Le Havre(FR)**

(72) Inventeur: **Hays, Michel**
**1, rue Robert Desnos "Les Coteaux de l'Abbaye"**
**F-76290 Montivilliers(FR)**

(72) Inventeur: **Lemoine, Guy**
**81, rue Louis Delamare**
**F-76600 Le Havre(FR)**

(72) Inventeur: **Lucas, Robert**
**34, rue Demidoff**
**F-76600 Le Havre(FR)**

(72) Inventeur: **Reygrobellet, Joseph**
**94, rue Croix Saint Loup**
**F-77100 Meaux(FR)**

(72) Inventeur: **Vernon, Michel**
**34, Chemin de Saint Jean**
**F-77470 Trilport(FR)**

(74) Mandataire: **Jolly, Jean-Pierre et al,**
**Cabinet BROT 83, rue d'Amsterdam**
**F-75008 Paris(FR)**

(54) **Procédé de préparation d'un matériau rigide expansé à base de polychlorure de vinyle et matériau rigide obtenu par ce procédé.**

(57) Le procédé est du type comprenant une première étape d'obtention d'un plastisol, une deuxième étape de moulage dudit plastisol conduisant à l'obtention d'un embryon et une troisième étape d'expansion de l'embryon.

Selon l'invention, lors de la première étape, on introduit dans le mélange une charge de particules minérales dont les dimensions sont comprises entre 0,5 et 500 microns.

On peut réaliser par ce procédé un polychlorure de vinyle rigide expansé de poids spécifique élevé.

EP 0 037 308 A1

## Procédé de préparation d'un matériau rigide expansé à base de polychlorure de vinyle et matériau rigide obtenu par ce procédé.

La présente invention concerne un procédé perfectionné de préparation d'un matériau rigide expansé à base de polychlorure de vinyle. L'invention concerne également le matériau rigide obtenu par ce procédé.

La préparation du polychlorure de vinyle rigide expansé est une opération bien connue, qui a été de nombreuses fois décrite dans la littérature et a fait l'objet de nombreux brevets. On peut citer, par exemple, le brevet français n° 2 408 451.

La préparation du polychlorure de vinyle rigide expansé se fait en trois étapes :

a) Une première étape du procédé consiste à réaliser un mélange d'au moins trois constituants :

- un premier constituant, qui est le constituant principal en pourcentage en poids, et qui est le polychlorure de vinyle lui-même ;

- au moins un deuxième constituant, susceptible de donner naissance à un gaz et qui peut être notamment l'azobisisobutyronitrile et/ou l'azodicarbonamide, le gaz engendré étant, dans ce cas, l'azote ;

- au moins un troisième constituant, susceptible d'engendrer un gaz, qui peut être, par exemple, un isocyanate ou un polyisocyanate, le gaz résultant étant, dans ce cas, l'anhydride carbonique.

En général, un quatrième constituant, un anhydride organique, tel que l'anhydride phtaliques, est introduit dans le mélange.

D'autres ingrédients, notamment des stabilisants, peuvent être incorporés dans le mélange au cours de cette première étape.

Il y a lieu de noter que la présence dans le mélange d'au moins un composé liquide est souhaitée afin d'obtenir un mélange homogène. Ce composé liquide est, par exemple, l'isocyanate et/ou le polyisocyanate.

Le produit obtenu à la fin de cette première étape est communément appelé "plastisol".

b) Une deuxième étape du procédé consiste en un moulage du plastisol à une température qui peut être comprise, par exemple, entre 150 et 200°C, de préférence entre 160 et 180°C, et à une pression qui peut être comprise entre 5 et 500 bars et, de préférence, entre 100 et 300 bars.

Cette deuxième étape conduit à l'obtention d'un produit souple thermoplastique, contenant de très petites cellules, qui proviennent probablement de la décomposition thermique d'un ou de plusieurs constituants du plastisol.

Le produit ainsi obtenu, à l'issue de cette deuxième étape, est communément appelé "embryon".

c) Dans une troisième étape, on procède à l'expansion de l'embryon, par mise en contact de celui-ci avec de l'eau, en phase liquide ou en phase vapeur, à une pression qui est de préférence voisine de la pression atmosphérique et à une température de préférence comprise entre 70 et 100°C environ.

La température à laquelle est effectuée l'expansion peut être d'ailleurs plus élevée, si on ajoute à l'eau un constituant approprié, comme le glycol, par exemple.

Cette troisième étape d'expansion peut être réalisée soit dans un cadre d'expansion dont les dimensions sont choisies en fonction de la taille désirée pour le produit final, soit en laissant l'embryon s'expanser librement.

Les réactions qui interviennent dans cette troisième étape ne sont pas exactement définies. On considère généralement que le troisième constituant, l'isocyanate ou le polyisocyanate, réagit avec l'eau et/ou le quatrième constituant, quand celui-ci existe.

On obtient ainsi une structure rigide expansée grâce aux gaz provenant des différentes réactions.

Un tel procédé permet d'obtenir des qualités variées de polychlorure de vinyle expansé rigide. Le poids spécifique du produit obtenu peut être notamment modifié en faisant varier la quantité d'anhydride phtalique incorporé dans le mélange initial. On peut ainsi obtenir des produits ayant des poids spécifiques pouvant varier environ de 20 à environ 500 kg/m$^3$. Le poids spécifique le plus élevé peut être obtenu, notamment, quand on n'incorpore pas d'anhydride organique dans le mélange.

Il est donc possible de préparer un polychlorure de vinyle expansé rigide qui correspond à l'application envisagée. Des produits de poids spécifiques élevés, par exemple, peuvent résister à de hautes pressions hydrostatiques et peuvent être employés, notamment, dans le domaine de la recherche pétrolière et de l'aérospatiale.

La troisième étape d'expansion, dans le procédé de fabrication décrit ci-dessus, est longue, notamment quand il s'agit de fabriquer des produits de poids spécifique élevé. En outre, la reproductibilité des fabrications n'est pas toujours constante.

De plus, pour les produits de poids spécifique faible, les formulations usuelles ne conduisent pas toujours à une cellularisation très fine permettant d'obtenir un faible coefficient de conductivité thermique demandé pour les applications en isolation.

En vue de remédier à ces inconvénients, la Demanderesse a conçu un moyen permettant notamment de diminuer le temps de fabrication du polychlorure de vinyle expansé rigide et d'obtenir des produits de faible coefficient de conductivité thermique.

La présente invention vise, par conséquent, à améliorer la préparation de polychlorure de vinyle expansé rigide, en vue de réduire la durée de la fabrication et donc d'en diminuer le coût, et d'obtenir plus facilement les qualités de produit désirées.

A cet effet, l'invention a pour objet un procédé de préparation de polychlorure de vinyle expansé rigide du type décrit ci-dessus, caractérisé en ce que, lors de la réalisation du mélange initial, on introduit dans ledit mélange une charge de particules minérales dont les dimensions sont comprises entre 0,5 et 500 microns.

Un autre objet de l'invention est constitué par l'application du procédé décrit ci-dessus à l'obtention de polychlorure de vinyle expansé rigide de poids spécifique élevé.

Par poids spécifique élevé, on entend, dans le cadre de la présente invention, des poids spécifiques voisins ou supérieurs à 100 kg/m$^3$ environ.

Selon l'invention, on introduit donc dans le mélange initial une charge de particules minérales dont les dimensions sont comprises entre 0,5 et 500 microns.

Au sens de la présente demande, les charges de particules ayant des dimensions comprises entre 0,5 et 500 microns peuvent contenir des particules ayant des dimensions inférieures ou supérieures à ces limites, mais 80% au moins des particules doivent avoir des dimensions comprises entre ces deux valeurs.

Les dimensions des particules sont de préférence comprises entre 2 et 100 microns. Il est en effet préférable que la taille des particules ne soit pas trop importante, afin de ne pas nuire aux propriétés mécaniques du produit final, car si les particules sont trop grosses, on risque d'obtenir certaines cellules non fermées.

Les particules minérales peuvent être, par exemple, des particules de verre, de sable ou de kaolin.

Les particules peuvent être de formes diverses, elles peuvent, par exemple, avoir une forme sensiblement sphérique.

La Demanderesse a ainsi utilisé des microsphères de verre d'une granulométrie inférieure à 100 microns.

Dans le procédé selon l'invention, le mélange initial peut contenir notamment de 1 à 25% en poids de particules minérales et, de préférence, de 5 à 20% en poids de telles particules.

Le polychlorure de vinyle qui peut être utilisé dans le procédé selon l'invention peut être un polychlorure de vinyle obtenu par polymérisation en émulsion du chlorure de vinyle. Il a un indice de viscosité généralement compris entre 130 et 210 (mesuré selon la norme française NFT 51-013), et une masse volumique apparente voisine de 0,4.

Le mélange intial peut contenir notamment de 30 à 60% en poids de polychlorure de vinyle.

Le deuxième constituant, susceptible d'engendrer un gaz, peut être, notamment, l'azobisisobutyronitrile ou l'azodicarbonamide, éventuellement en mélange.

Le mélange initial peut contenir notamment de 0,5 à 10% en poids du deuxième constituant.

Le troisième constituant, susceptible de produire un gaz, peut être notamment le toluène -2,4- diisocyanate (pouvant contenir du toluène-2,6 -diisocyanate) ou le diphénylméthane - 4,4' - diisocyanate, éventuellement en mélange. Le mélange initial peut contenir, notamment, de 20 à 40% en poids du troisième constituant.

Le mélange initial peut également contenir un anhydride organique, comme l'anhydride phtalique, l'anhydride maléique ou l'anhydride succinique. Il peut contenir notamment de 0 à 20% en poids d'un tel anhydride.

Il peut également contenir des additifs, par exemple des stabilisants, comme des sels de plomb tels le phosphite dibasique et le stéarate de plomb, des pigments et des colorants.

Le procédé selon l'invention peut être notamment appliqué à l'obtention de polychlorure de vinyle expansé rigide de poids spécifique élevé, lorsque l'on n'introduit pas d'anhydride organique dans le mélange initial, ou tout au moins lorsque l'on réduit la quantité introduite . Le polychlorure de vinyle expansé rigide de poids spécifique élevé obtenu par le procédé selon l'invention possède les mêmes propriétés de résistance à la pression hydrostatique qu'un polychlorure de vinyle expansé rigide de poids spécifique élevé obtenu par un procédé classique, sans introduction de particules minérales de dimensions comprises entre 0,5 et 500 microns. Par contre, la durée de la fabrication est considérablement réduite, comme le montreront les exemples suivants.

Le procédé selon l'invention permet également d'obtenir du polychlorure de vinyle expansé rigide de plus faible conductivité thermique, de meilleure résistance au feu que ceux obtenus par les procédés connus et permet aussi de diminuer de façon substantielle le pourcentage d'ingrédients comme l'anhydride phtalique pour obtenir des produits de poids spécifique plus faible.

L'invention est illustrée par les cinq exemples suivants, qui n'ont aucun caractère limitatif.

## EXEMPLE I

Cet exemple concerne la préparation de polychlorures de vinyle expansés rigides.

On a préparé des polychlorures de vinyle expansés rigides :

- d'une part, par un procédé classique, à partir d'un mélange ne contenant pas de particules minérales, telles que celles définies précédemment ;

- d'autre part, par le procédé conforme à l'invention, c'est-à-dire à partir d'un mélange contenant des particules minérales telles que celles définies précédemment.

Ces polychlorures de vinyle expansés rigides ont été préparés de la manière suivante :

a) Fabrication du plastisol

On réalise tout d'abord, dans un mélangeur, à une température voisine de 20°C, sept mélanges de plastisol T1, T2, T3, A1, A2, A3 et A4, dont la composition est donnée dans le Tableau I ci-après.

Les mélanges T sont des mélanges témoins ne contenant pas de microsphères de verre, alors que les mélanges A en contiennent

TABLEAU I

| N° | CONSTITUANTS | COMPOSITION, EN % POIDS | | | | | | |
|---|---|---|---|---|---|---|---|---|
| N° | NATURE | T1 | T2 | T3 | A1 | A2 | A3 | A4 |
| 1 | Polychlorure de vinyle (a) | 58,9 | 58,9 | 54,3 | 51,7 | 51,9 | 50,7 | 49,8 |
| 2 | Azodicarbonamide | 0,9 | 0,9 | 0,7 | 0,8 | 0,8 | 1,0 | 0,7 |
|  | Azobisisobutyronitrile | 0,9 | 0,9 | 1,0 | 0,8 | 0,8 | 1,0 | 1,0 |
| 3 | Toluène diisocyanate (b) | 24,0 | 28,0 | 15,5 | 21,0 | 24,6 | 13,5 | 15,5 |
|  | Diphénylméthane-4,4'-diisocyanate | 14,0 | 10,0 | 12,5 | 12,4 | 8,8 | 13,5 | 12,5 |
| 4 | Anhydride phtalique | 0 | 0 | 9,5 | 0 | 0 | 0 | 8,0 |
| AUTRES CONS-TITUANTS | Microsphères de verre (c) | 0 | 0 | 0 | 12,0 | 12,0 | 19,0 | 6,0 |
|  | stabilisants — Mélange (50%-50% en poids) de phosphite dibasique et de stéarate de plomb | 1,0 | 1,0 | 1,0 | 1,0 | 0,8 | 1,0 | 1,0 |
|  | stabilisants — $\alpha$ phénylindole | 0,3 | 0,3 | 0,5 | 0,3 | 0,3 | 0,3 | 0,5 |
|  | Trichlorofluorométhane | | | 5,0 | | | | 5,0 |

(a, b, c, voir page suivante)

a) Indice de viscosité 200 (selon norme AFNOR T 51-013) préparé en émulsion.

b) Mélange de 80% de toluène-2,4,-diisocyanate et de 20% de toluène-2,6-diisocyanate.

c) Granulométrie comprise entre 5 et 50 microns et densité égale à 2,46.

b) Fabrication de l'embryon

Les plastisols sont ensuite moulés.

On dispose de trois sortes de moules, de tailles différentes ;

- des moules M10, de dimensions 360 x 225 x 10 mm ;
- des moules M20, de dimensions 100 x 100 x 20 mm ;
- des moules M30, de dimensions 360 x 225 x 30 mm.

On remplit les moules avec du plastisol.

Les moules sont ensuite fermés et portés, sous une pression de 250 kg/cm$^2$, à une température de 175°C.

On obtient ainsi différents embryons, dont les références sont données dans le Tableau II ci-dessous :

TABLEAU II

| MOULE | PLASTISOL | EMBRYON |
|-------|-----------|---------|
| M10 | T1 | T11 |
| | A1 | A11 |
| M20 | T2 | T22 |
| | A2 | A22 |
| | A3 | A32 |
| | T3 | T32 |
| | A4 | A42 |
| M30 | T1 | T13 |
| | A1 | A13 |

c) Fabrication du polychlorure de vinyle expansé proprement dit

On réalise l'expansion des embryons en les plongeant dans de l'eau portée à 98°C et en les laissant s'expanser librement. On peut suivre la progression des réactions en mesurant préalablement par infrarouge le pourcentage de groupements isocyanate libres dans les embryons, puis, au cours de l'expansion des embryons dans les conditions ci-dessus, en mesurant le pourcentage de groupements isocyanate libres restants dans les produits, au bout de différents laps de temps.

Les résultats obtenus figurent dans le Tableau III ci-après :

TABLEAU III

| Référence Embryon | Référence de polychlorure de vinyle expansé rigide obtenu | Temps d'expansion en heures (pour durcissement final, 0% d'isocyanate) | Poids spécifique du polychlorure de vinyle en kg/m$^3$ |
|---|---|---|---|
| T11 | KT 11 | 40 | 272 |
| A11 | KA 11 | 18 | 264 |
| T13 | KT 13 | 240 | 300 |
| A13 | KA 13 | 162 | 297 |
| T32 | KT 32 | 16 | 106 |
| A42 | KA 42 | 10 | 93 |
| T22 | KT 22 | 90 | 300 |
| A22 | KA 22 | 48 | 290 |
| A32 | KA 32 | 24 | 270 |

- 10 -

0037308

- 11 -  0037308

Cet exemple montre que le temps de fabrication du polychlorure de vinyle expansé rigide est fortement diminué lorsqu'on utilise le procédé selon l'invention. Si on considère plus particulièrement les essais T22, A22 et A32, on peut remarquer que le temps de fabrication diminue, lorsque croît le pourcentage de microsphères de verre.

### EXEMPLE II

Cet exemple concerne des essais de résistance à la pression réalisés sur des échantillons des produits KT13, KA13, KT22 et KA32, préparés dans l'exemple précédent.

On a placé successivement dans une enceinte métallique des échantillons pesés des produits KT13, KA13, KT22, KA22 et KA32.

On a introduit de l'eau dans l'enceinte, que l'on a portée respectivement à une pression de 40 kg/cm$^2$, pour les produits KT13 et KA13, et 20 kg/cm$^2$, pour les essais KT22, KA22 et KA32. On y a laissé les échantillons pendant 24 heures.

On a pesé les échantillons, puis on les a repesés, après les avoir laissés pendant 24 heures à l'air, à la température ambiante. Les résultats des deux pesées sont identiques.

On a constaté que l'augmentation de poids était nulle pour KT13, KT22, KA22, de 0,2% pour KA13 et 0,4% pour KA32.

Cet exemple montre, par conséquent, que les produits préparés par le procédé selon l'invention ont des propriétés de résistance à la pression pratiquement identiques à ceux préparés par un procédé classique.

### EXEMPLE III

Cet exemple concerne, comme l'exemple I, la préparation de polychlorures de vinyle expansés rigides.

On a préparé, comme dans l'exemple I, des produits selon le procédé de l'invention et des produits témoins selon un procédé connu.

a) Fabrication du plastisol

On réalise tout d'abord, dans un mélangeur, à une température voisine de 20°C, cinq mélanges de plastisol T5, T6, T7, A5 et A6, dont la composition est donnée dans le Tableau IV, ci-après.

Les mélanges T sont des mélanges témoins ne contenant pas de microsphère de verre, alors que les mélanges A en contiennent.

TABLEAU IV

| N° | CONSTITUANTS | | COMPOSITION, EN % POIDS | | | | |
|----|----|----|----|----|----|----|----|
| N° | NATURE | | T5 | T6 | T7 | A5 | A6 |
| 1 | Polychlorure de vinyle (a) | | 59,5 | 55,0 | 46,0 | 49,5 | 45,0 |
| 2 | Azodicarbonamide | | 0,7 | 0,7 | 0,7 | 0,7 | 0,7 |
|   | Azobisisobutyronitrile | | 1,5 | 1,5 | 1,5 | 1,5 | 1,5 |
| 3 | Toluène diisocyanate (b) | | 17,0 | 17,0 | 17,0 | 17,0 | 17,0 |
|   | Diphénylméthane-4,4'-diisocyanate | | 10,0 | 10,0 | 10,0 | 10,0 | 10,0 |
| 4 | Anhydride phtalique | | 7,5 | 12,0 | 21 | 7,5 | 12,0 |
| AUTRES CONSTITUANTS | Microsphères de verre (c) | | 0 | 0 | 0 | 10,0 | 10,0 |
|   | Stabilisants | Mélange (50%-50% en poids) de phosphite dibasique et de stéarate de plomb | 1,5 | 1,5 | 1,5 | 1,5 | 1,5 |
|   |   | ⍺ phénylindole | 0,3 | 0,3 | 0,3 | 0,3 | 0,3 |
|   | Trichlorofluorométhane | | 2 | 2 | 2 | 2 | 2 |

a,b,c : voir légende du Tableau I . Les produits a, b et c sont identiques.

b) Fabrication de l'embryon

Les plastisols sont ensuite moulés dans des moules M20 identiques à ceux de l'exemple I et dont les dimension sont 100 x 100 x 20 mm.

On remplit les moules avec du plastisol.

Les moules sont ensuite fermés et portés, sous une pression de 250 kg/cm$^2$, à une température de 175°C.

On obtient ainsi différents embryons, dont les références sont données dans le Tableau V ci-dessous :

TABLEAU V

| PLASTISOL | EMBRYON |
|-----------|---------|
| T5 | T52 |
| T6 | T62 |
| T7 | T72 |
| A5 | A52 |
| A6 | A62 |

c) Fabrication du polychlorure de vinyle expansé proprement dit

On réalise l'expansion des embryons en les plongeant dans de l'eau portée à 98°C et en les laissant s'expanser librement.

Les résultats obtenus figurent dans le Tableau VI ci-après :

## TABLEAU VI

| Référence Embryon | Référence de polychlorure de vinyle expansé rigide obtenu | Temps d'expansion en heure (pour durcissement final) | Poids spécifique du polychlorure de vinyle en $kg/m^3$ |
|---|---|---|---|
| T52 | KT52 | 20 | 130 |
| A52 | KA52 | 10 | 95 |
| T62 | KT62 | 10 | 75 |
| T72 | KT72 | 3 | 40 |
| A62 | KA62 | 2,5 | 40 |

Ce tableau permet de constater en comparant KT52 et KA52, d'une part, et KT62 et KA62, d'autre part, qu'avec la même quantité d'anhydride phtalique, 7,5% pour KT52 et KA52 et 12% pour KT62 et KA62, on obtient des densités plus faibles quand on emploie des microsphères de verre. On fait donc une économie d'anhydride phtalique avec le procédé selon l'invention.

### EXEMPLE IV

Cet exemple concerne des mesures de conductivité thermique effectuées sur les polychlorures de vinyle rigides expansés KT72 et KA62 préparés dans l'exemple III.

Ces mesures sont effectuées conformément à la norme AFNOR NFT 56-124.

On a obtenu les résultats suivants :

|  | coefficient de conductivité thermique |  |
|---|---|---|
| à 10°C pour KT72 | 0,029 | Watt/m °C |
| pour KA62 | 0,026 | - |
| à 20°C pour KT72 | 0,031 | - |
| pour KA62 | 0,028 | - |

Cet exemple montre que, si on compare des produits préparés conformément au procédé selon l'invention et des produits préparés selon le procédé connu, ces produits ayant la même densité, 40 kg/m$^3$, les produits préparés par le procédé selon l'invention ont un coefficient de conductivité thermique plus faible et sont donc meilleurs en isolation.

### EXEMPLE V

Cet exemple concerne des essais de résistance au feu effectués sur les polychlorures de vinyle expansés KT72 et KA62 préparés dans l'exemple III.

Ces essais sont effectués selon le règlement de l'aviation américaine F.A.R. n° 25863 appendice F. Ils consistent à soumettre un échantillon en position verticale à l'action d'une flamme normalisée et à mesurer la longueur brûlée.

On a obtenu, pour des échantillons d'épaisseur de 20mm, les résultats suivants :

longueur brûlée en
cm

| | |
|---|---|
| pour KT72 | 10 à 12 |
| pour KA62 | 2 à 6 |

Les produits préparés par le procédé selon l'invention ont donc une meilleure résistance au feu.

REVENDICATIONS

1.- Procédé de préparation de polychlorure de vinyle rigide expansé, comprenant trois étapes :

a) une première étape d'obtention d'un plastisol par mélange d'au moins un premier constituant, à savoir le polychlorure de vinyle, un deuxième constituant, générateur de gaz, et un troisième constituant, générateur de gaz ;

b) une deuxième étape de moulage dudit plastisol, conduisant à l'obtention d'un embryon;

c) une troisième étape d'expansion de l'embryon, conduisant à l'obtention du matériau rigide expansé proprement dit;

ledit procédé étant caractérisé en ce que, lors de la première étape, on introduit dans le mélange une charge de particules minérales dont les dimensions sont comprises entre 0,5 et 500 microns.

2.- Procédé selon la revendication 1, caractérisé en ce que les particules minérales ont des dimensions comprises de préférence entre 2 et 100 microns.

3.- Procédé selon l'une des revendications 1 et 2, caractérisé en ce que les particules minérales sont choisies dans le groupe constitué par des particules de verre, de sable ou de kaolin.

4.- Procédé selon l'une des revendications 1 à 3, caractérisé en ce que les particules minérales sont des sphères de verre ayant une granulométrie comprise entre 5 et 50 microns.

5.- Procédé selon l'une des revendications 1 à 4, caractérisé en ce que la teneur en particules minérales du plastisol est comprise entre 1 et 25% et, de préférence, entre 5 et 20% en poids.

6.- Le polychlorure de vinyle rigide expansé préparé par un procédé selon l'une des revendications 1 à 5.

7.- Le polychlorure de vinyle rigide expansé selon la revendication 6, caractérisé en ce que son poids spécifique est voisin ou supérieur à $100 kg/m^3$.

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendica-tion concernée |
|---|---|---|
| | FR - A - 1 266 487 (C. DUFOUR) <br> * Résumé; page 2, exemple * | 1,5,6 |
| | -- | |
| | FR - A - 1 313 237 (POLYPLASTIC) <br> * Résumé; page 1, dernier para-graphe - page 2, paragraphe 4; exemple * | 1-3,5,6 |
| | -- | |
| | US - A - 3 247 158 (H.E. ALFORD et al.) <br> * Revendications 1,3; colonne 5, lignes 19-30 * | 2-4 |
| | -- | |
| A | GB - A - 1 517 910 (BP CHEMICALS) | 4 |
| A | US - A - 3 947 388 (HIDEO OHKAWA et al.) | 1 |
| A | FR - A - 1 320 731 (LONZA) <br> * Exemple 2 * | 3 |
| | -- | |
| A | FR - A - 2 390 263 (BAYER) | 4 |
| | ---- | |

CLASSEMENT DE LA DEMANDE (Int Cl³)

C 08 J 9/06
C 08 K 3/00
C 08 L 27/06

DOMAINES TECHNIQUES RECHERCHES (Int. Cl.³)

C 08 J 9/00
9/04
9/06
9/10
C 08 L 27/06
C 08 K 3/34
3/36
3/00
C 08 K 7/16
7/20

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 01-07-1981 | HALLEMEESCH |

OEB Form 1503.1   06.78